Europäisches Patentamt

European Patent Office

Office européen des brevets

(11) Publication number: **0 221 040**
A2

(12) # EUROPEAN PATENT APPLICATION

(21) Application number: 86850369.9

(22) Date of filing: 23.10.86

(51) Int. Cl.⁴: **B 29 C 63/04**

(30) Priority: 24.10.85 AU 59261/86

(43) Date of publication of application: **06.05.87**
**Bulletin 87/19**

(84) Designated Contracting States: **AT BE CH DE ES FR GB GR IT LI LU NL SE**

(71) Applicant: **Architectural Cladding Industries PTY Limited, 50 Chegwyn Street, Botany New South Wales, 2019, (AU)**

(72) Inventor: **Derk Van Zanten, Hermanus, 5 Murraiah Place, Lane Cove, New South Wales, 2066 (AU)**

(74) Representative: **Roth, Ernst Adolf Michael et al, GÖTEBORGS PATENTBYRA AB Box 5005, S-402 21 Göteborg (SE)**

(54) **Moulding method.**

(57) An improved method of manufacturing a composite product of the type comprising a core of substantially uniform cross-section clad with a suitably rigid material, which method comprises cold drawing a core and a suitably rigid material providing the facing, through a die orifice having a tapered entry and shaped to mould the strip into intimate contact with the face of the core while simultaneously wrapping opposite margins of the strip around respective formations provided on the core to anchor the moulded strip to it.

EP 0 221 040 A2

THIS INVENTION relates to a method of manufacturing a composite product comprising a core of substantially uniform cross-section clad with a suitably rigid material such as a metal facing strip. Such a composite product is hereinafter referred to as being "of the type described" and it has the advantage that its strength is determined by the core and its appearance is determined by the rigid material.

Currently available composite products of the type described commonly comprise a wooden core having a pre-formed metal strip glued to its surface to provide the facing. A disadvantage with a product so manufactured is that break down of the glue caused by thermal changes or flexing of the product often occurs with the result that the facing strip breaks away from the surface of the core.

An object of this invention is to provide an improved way of manufacturing a composite product of the type described.

In addition, the invention permits an almost unlimited variety of cross-sections (profiles) to be manufactured. This means the product can be manufactured to overcome mechanical problems associated with fixing or structural rigidity to suit a particular specification. Further, a client's requirement from a purely aesthetic point of view can be accommodated. This aspect of the invention means that the scope of application of the product has increased over that of currently available products. In excess of 400 cross-sections are presently available in accordance with our invention.

In accordance with the present invention therefor a composite product of the type described, is manufactured by cold drawing a core and a suitably rigid strip providing the facing, through a die orifice having a tapered entry and shaped to mould the strip into intimate contact with the face of the core while simultaneously wrapping opposite margins of the strip around respective formations provided on the core to anchor the moulded

- 2 -

strip to it. Preferably this rigid strip is metal.

Preferably the formations comprise beads or shoulders around which the margins of the strip are wrapped and which may be flanked on their sides remote from the face, by grooves which accommodate the edges of the strip and are of a sufficient depth to accommodate lateral expansion of the strip which may occur as it is drawn through the die orifice. The grooves which accommodate the edges of the strip are created by the projections in the die. These projections dig into the core and simultaneously return the facing strip into the core.

In the preferred method of carrying out the invention the strip and core are drawn in unison and at a constant speed through the die orifice. If the core is wood, it may be drawn through the die orifice on its own before the composite product is drawn through it. The wood core should be free of knots. Conveniently the cross-section of the strip is preformed into the general profile of the face of the core it is to clad before the composite product is manufactured.

The die may be of metal or of composite construction whereby it provides a two-part die. One part is formed by a metal die and the other part is provided by a die made from a self-lubricating material such as a graphite and nylon composition available from Cadilac Plastics, Sydney. The two die parts have contiguous and registering die orifices and said other part has a flared orifice entry. The wrapping around of the margins of the strip may be done by rollers in the die having suitably profiled rolling surfaces which bear on the margins as they travel through the die.

The invention will now be described in more detail, by way of examples, with reference to the accompanying diagrammatic informal drawings, in which:-

FIGURE 1 shows a draw-bench, in side elevation and partially broken away;

FIGURE 2 comprises two sketches "A" and "B" showing perspective sections taken through a core and a cladding strip on the planes indicated by the arrows (i)-(i) and (ii)-(ii) in Figure 1, the planes being upstream and downstream, respectively, of a die mounted in a frame on the draw-bench;

FIGURE 3 shows, in perspective and in end elevation respectively, one construction of die used in the draw-bench of figure 1;

FIGURE 4 shows in plan and perspective views respectively, upper and lower portions of the die of figure 3;

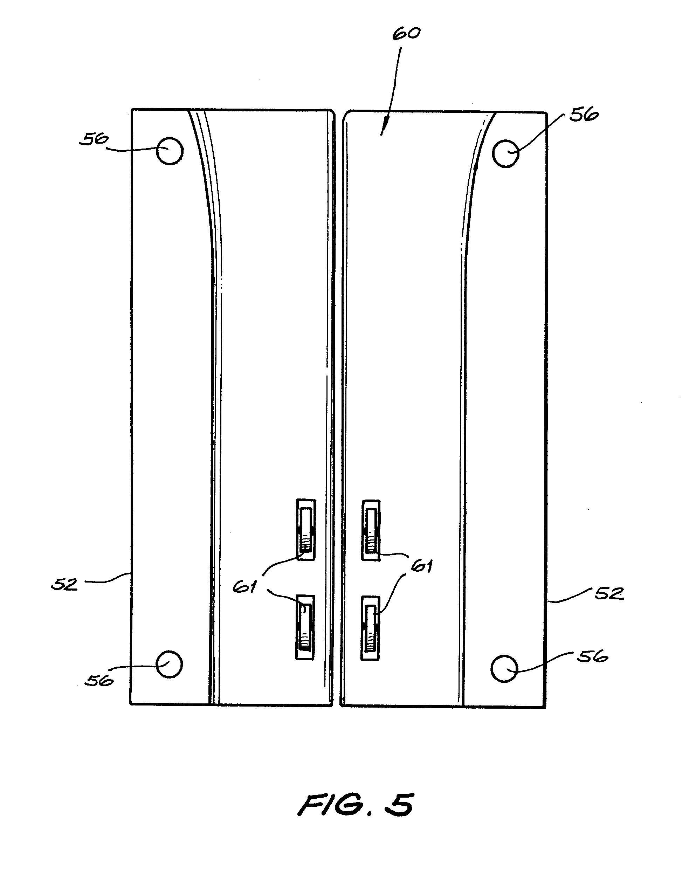

FIGURE 5 is an inverted plan view of the upper die portion of figure 4;

FIGURE 6 shows a die of composite construction in opposite end elevations in sketches "A" and "C", in plan in sketch "B", in cross-section in sketch "D" along the plane indicated by the arrows (ii)-(ii) in sketch "B" and in an offset exploded view in sketch "E";

FIGURE 7 shows in sketches "A" and "B" respectively end and vertical sectional views through a plate die, and in sketches "C", "D" and "E", stages in the manufacture of a second composite product using an aluminium box core clad on one pair of opposite sides by flat metal strips;

FIGURE 8 shows a plate die in side and end elevation in sketches "A" and "B", and used to provide the composite product shown in figure 2 when fitted to the draw bench of figure 1, the core and cladding strip of the composite product being shown in cross-section in sketches "C" to "F" at different stages in its manufacture; and,

FIGURE 9 shows in end and side elevation sketches "A" and "B" respectively a construction of die for making a composite product of a different cross-section from those shown in earlier figures.

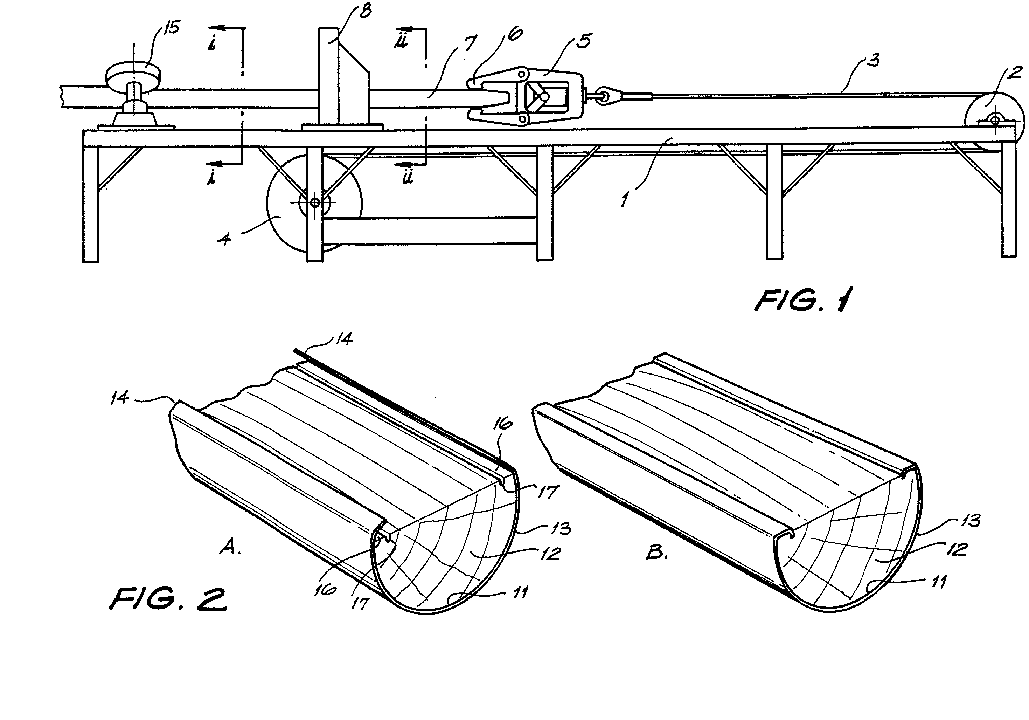

Figure 1 shows a draw-bench 1 having a pulley 2 at one end around which passes a draw cable 3 which is hauled by a capstan 4 driven by a hydraulic operated piston (not shown) beneath the bench. The upper end of the cable 3 is attached to a travelling clamp 5 having jaws 6 which are shown gripping a tapered end of a workpiece 7. The workpiece 7 is actually a composite product of the type described and which is drawn cold through an orifice of a die mounted within a rigid stationery frame 8 on the bench 1. The composite product comprises an elongated wooden core 12 shown in figure 2, of semi-circular cross-section and having its semi-cylindrical face 11 clad by a metal strip 13. Before the composite product is manufactured, the strip 13 is preformed into a generally semi-cylindrical shape and its arcuate dimension is such that its opposite margins 14 project above the flat upper surface of the core 12 prior to the strip 13 coming into contact with a pair of projections on its passage through the die orifice which deforms the strip progressively around the core and into the grooves in the core on the opposite side to the face. Item 15 is a set of rollers used to help centre the material in the machine prior to drawing.

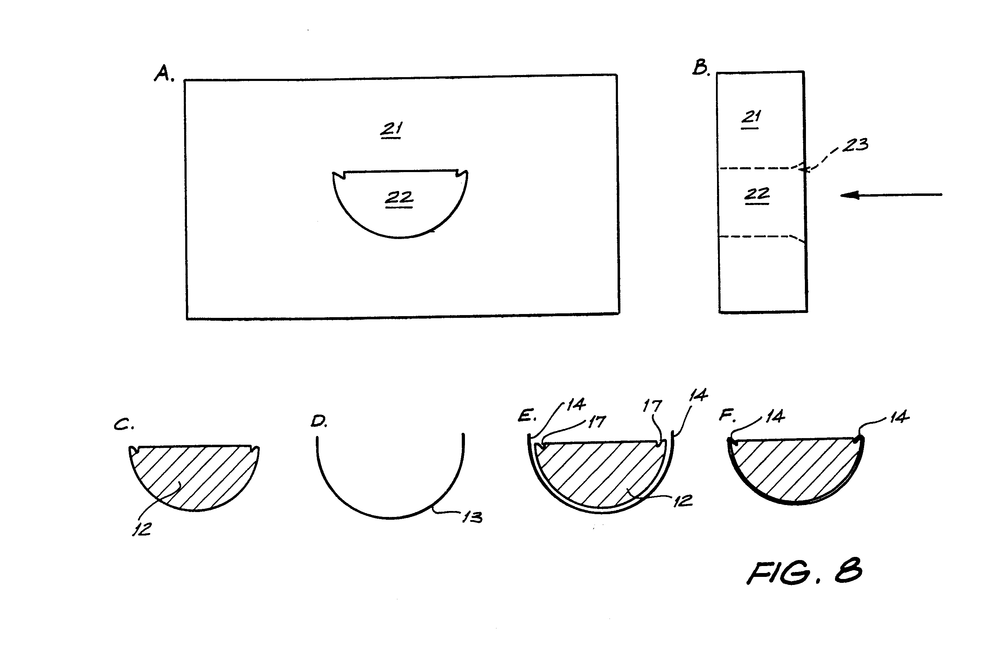

The die of figure 8 comprises a mild steel plate 21 having a central die orifice 22 of the shape illustrated and having a tapered inlet 23 shaped progressively to wrap the marginal edge portions of the strip up and around the formations 24 so that the strip edges are received in the grooves 17 as shown clearly in sketch "B" in figure 2.

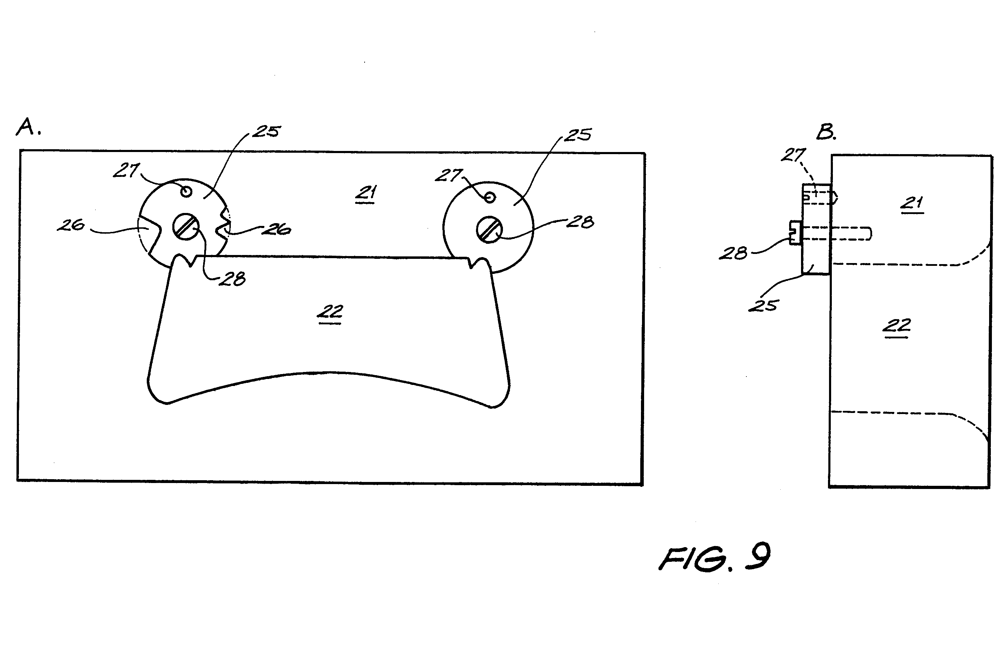

Figure 9 shows a die for making a composite product of the type described, where the guage of the surfacing material can be varied and which is able to accommodate different core cross-sections. In this figure the portions of the die which accomplish the wrapping of the strip margins around the core formations are formed in disc elements 25 bolted to the die plate 21 as shown. The elements 25 have appropriately shaped notches 26 formed in their peripheral surfaces and which can be brought into registration with the corners of the die orifice to bend the strip margins around differently shaped formations 16 on cores of different cross-sections. Each disc element 25 is held in place by a bolt 26, and a grub screw 27 entering a locating recess in the plate 21 is used to hold the element 25 against rotation.

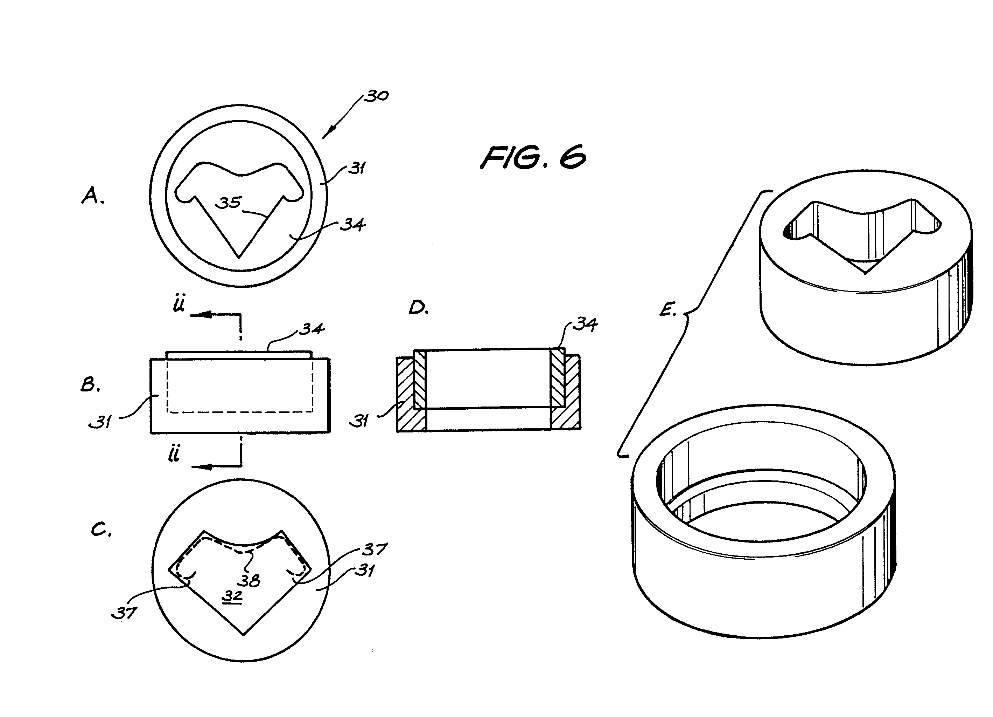

Figure 6 shows a two-part die 30 used to make a third shape of composite product. The die 30 comprises a mild steel cup part 31 having a die orifice 32 shaped to the external profile of the composite product as shown in sketch "C". The second part of the die is formed by an insert 34 made from a self-lubricating composition of graphite and nylon as referred to earlier, and formed with an inwardly tapering orifice 35 which, at its inner end, registers with the orifice 32. The inward taper of the orifice 35 deforms the strip margins progressively to wrap them around the strip-anchoring formations as the core and strip are drawn in unison and at constant speed through the two-part die orifice. The positions of the core formations are shown in figure 6 at 37, the position of the strip in the composite product emerging from the die orifice being shown by the broken outline 38 in sketch "C".

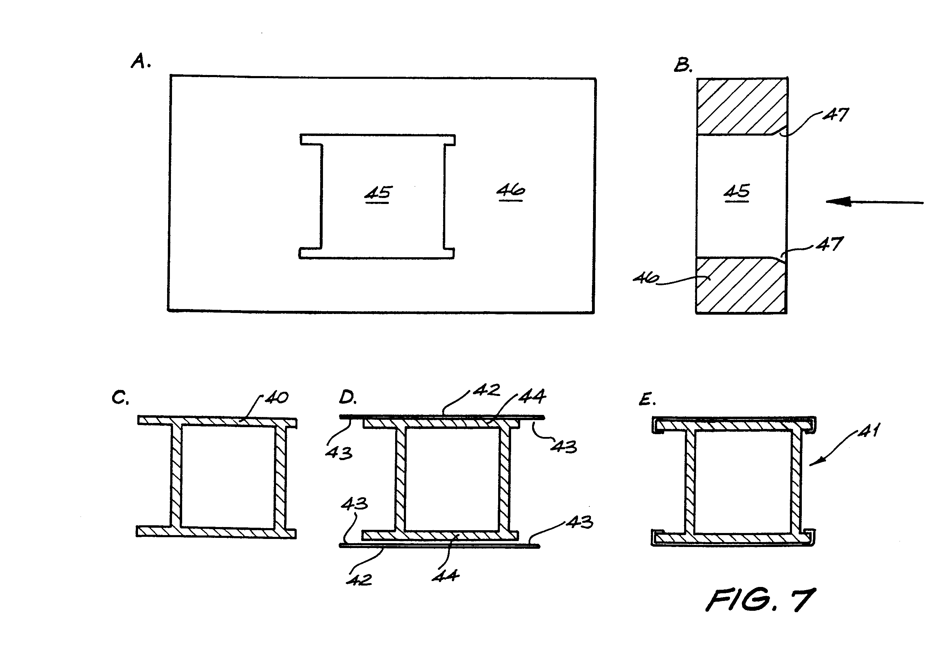

Figure 7 shows a die used to form a composite product of the type described, by cladding an aluminium box section extrusion. Sketch "C" shows the extrusion 40 in section, and it provides the core of the product shown at 41 in sketch "E".

The strips used to clad the core are shown at 42 in sketch "D"

and their margins 43 overlap the opposite faces 44 of the core to be clad.  The aluminium core 40 is sandwiched between two of the strips 42, as shown in sketch "D", as it travels towards an H-shaped orifice 45 in a mild steel plate die 46 shown in sketch "A".  The orifice has a tapered entry, shown at 47 in sketch "B" which guides the strip margins 43 so that they wrap around respective corner formations of the box shaped section of the aluminium extrusion 40 as shown in sketch "E".

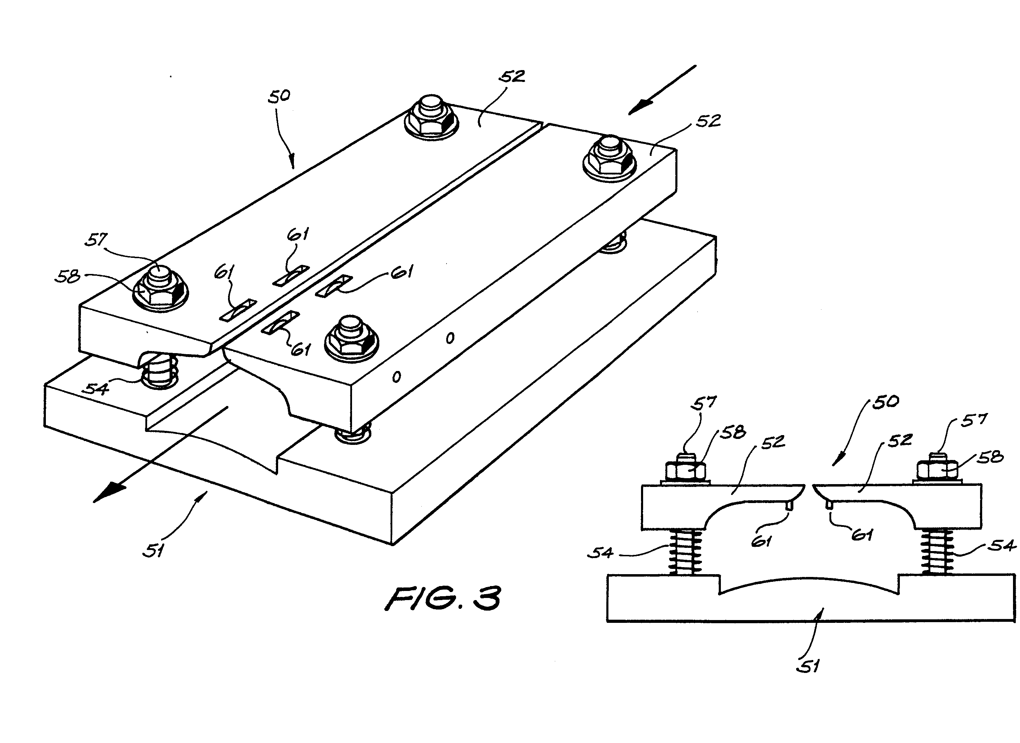

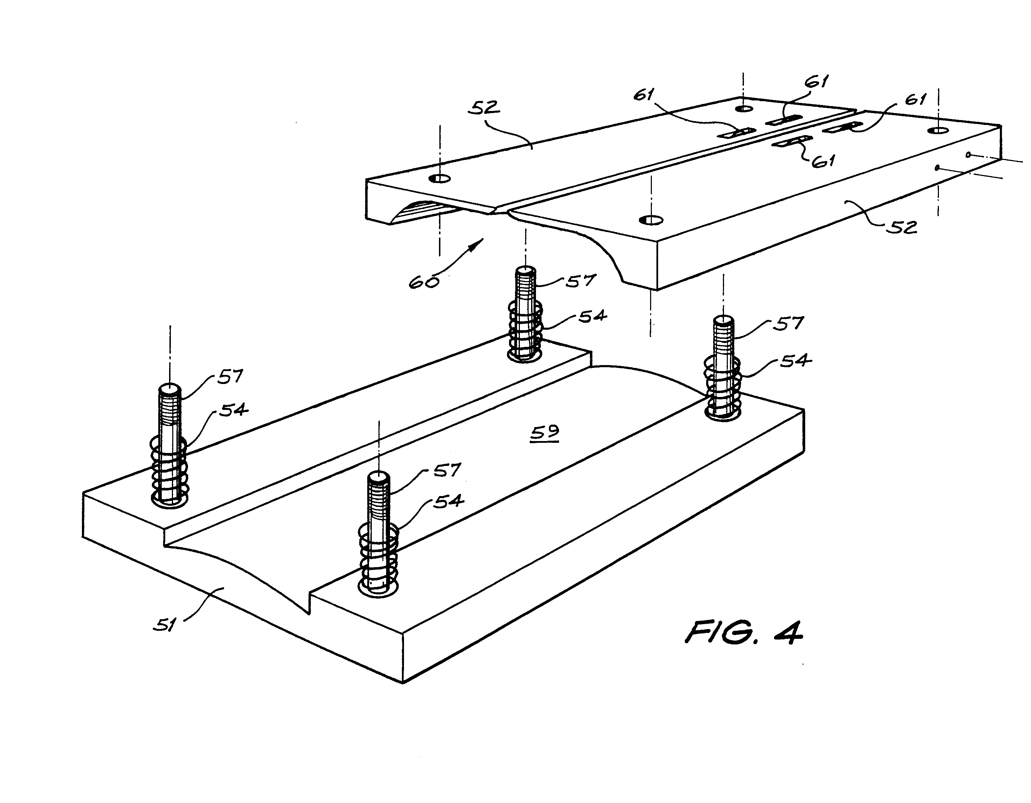

The wrapping around of the strip margins to anchor them to the core may be assisted by incorporating rollers into the die orifice as shown in figures 3 and 4.  The die shown in these figures is for producing a composite product of the type described, which has a convex surface clad with strip on one side and its opposite surface concave.  The die has an upper part 50 formed by two opposed top plates 52, and a lower part formed by a base plate 51.  The upper and lower parts are spaced by tension springs 54 threaded onto screw studs 57 extending upwardly from the base part 51 and passing through holes 56 formed in the top plates 52.  Nuts 58 screwed onto the studs 57 determine the spacing between the upper and lower die parts.

The base plate 51 is formed with a central channel 59 having a part cylindrical convex floor and of uniform cross-section throughout its length.  The upper plates 52 have an inwardly tapering entry 60 at the inlet side of the orifice and each carries a pair of rollers 61 let into respective slots formed through the plates 52 and having profiled peripheries which protrude into the die orifice, as shown in figure 3, at positions where they bear on the margins of a strip being drawn at constant speed through the die in unison with the core, so that they wrap them around respective anchoring formations provided on the core.

In all of the above examples the composite product is formed by the core and the pre-formed cladding strip being assembled together and the front end of the assembly being given a progressively narrower cross-section so that the product can be passed through the die orifice and clamped between the jaws 6 of the travelling clamp in figure 1. The draw-bench capstan is then operated to draw the combination of core and strip at constant speed through the die orifice. This moulds the contour of the strip, which already approximates in cross section to the underlying surface of the core as a result of the strip being pre-formed, into close conformity with the underlying surface of the core. The moulding forces applied to the strip may be such as to cause some lateral expansion of the strip metal. This is accommodated by the wrapping of the margins of the strip around the anchoring formations on the core during or after such expansion has taken place. The sharp side edges of the strip are tucked by the wrapping process into the grooves. As a result of this form of manufacture, the strip is moulded into a close conformity with the underlying core face to be clad and is anchored to the core by its own resilience as well as by having its margins wrapped around the core formations.

The composite product made by the method of the invention does not delaminate when flexed or subjected to thermal stresses, and it can be cut to any length without any tendency for de-laminaton to occur in the vicinity of the cut.

In some circumstances it may be necessary to oil the strip at the entry to the die orifice to assist the cold drawing of the metal strip through the orifice. Great care should be taken to avoid grit being drawn into the orifice with the strip.

Although this invention has been described in detail in respect of a metal strip, other suitably rigid materials include laminated materials such as "Marviplate" brand strip material and textured material such as "Rigid-Tex" brand sheet, from Chrome Hardening Pty Ltd of Sydney. Such materials can be drawn through the die with no deterioration in finish.

THE CLAIMS DEFINING THE INVENTION ARE AS FOLLOWS:-

1. A method of manufacturing a composite product of the type described, comprising cold drawing a core and a suitably rigid material providing the facing, through a die orifice having a tapered entry and shaped to mould the strip into intimate contact with the face of the core while simutaneously wrapping opposite margins of the strip around respective formations provided on the core to anchor the moulded strip to it.

2. The method claimed in Claim 1,wherein said suitably rigid material is a metal strip, or claim 2 in which the formations comprise beads intergrally-formed along longitudinally-extending corner portions of the core, the formations being flanked on their sides remote from the face with respective grooves which accommodate the edges of the strip and are of sufficient depth to accommodate the edges of the strip and are of suffcent depth to accommodate lateral expansion of the strip occurring as it is drawn through the die orifice.

3. A method as claimed in any one of the preceding claims, in which the strip and the core are drawn in unison and at a constant speed through the die orifice.

4. A method as claimed in any one of the preceding claims, in which the core is drawn by itself through the die orifice prior to the composite product being drawn therethrough.

5. A method as claimed in any one of the preceding claims, in which prior to the composite product being drawn through the die orifice the cross-sectional profile of the strip is preformed into the general shape of the face of the core it is to clad in the composite product.

6. A method as claimed in any one of the preceding claims, in which the die has two serially-arranged die parts providing respective registering orifices, the first die part encountered

0221040

by the composite product when drawn through the die having a flared entry to its orifice and being made of a self-lubricating composition, and the second die part being made of metal.

7. A method as claimed in any one of claims 1 to 6, in which the die incorporates rollers having surface profiles shaped and positioned in the die to wrap the margins of the strip around the formations as the composite product is drawn through the die.

8. A method as claimed in any one of the preceding claims where not withstanding that a die may be used for a particular cross section of finished product. The core cross section can be varied without altering the die provided the configuration of the cross section of the toeing strip is not altered.

9. A method as claimed in Claim 1, carried out substantially as described with reference to any one of the embodiments shown in the accompanying drawings.

10. A composite product of the type described, made by any one of the methods claimed in any one of the preceding claims.

Dated this 25th day of June 1986.

FIG. 1

FIG. 2

A.

B.

FIG. 3

0221040

FIG. 4

0221040

**FIG. 5**

FIG. 6

A.

30
31
35
34

B.
ii
34
31
ii

C.
37
38
32
37
31
37

D.
34
31

E.

5/8    0221040

A.

45    46

B.

47

45

46    47

C.

40

D.

42  44

43

43    43

42    44

E.

41

FIG. 7

A.

21

22

B.

21

23

22

C.

12

D.

13

E.

14  17  17  14

12

F.

14  14

FIG. 8

7/8    0221040

A.

B.

FIG. 9